# EUROPEAN PATENT SPECIFICATION

(11) **EP 2 503 876 B1**
(45) Date of publication and mention of the grant of the patent: **25.06.2014**
(21) Application number: 10798193.8
(22) Date of filing: 24.11.2010
(51) Int. Cl.: A01K 11/00, A01J 5/01, A01J 5/04

(54) **DEVICE FOR CONTROLLING MILK PRODUCED BY AN ANIMAL**
VORRICHTUNG ZUR KONTROLE DER ERZEUGTEN MILCH EINES TIERES
DISPOSITIF DE CONTRÔLE DU LAIT PRODUIT PAR UN ANIMAL

(30) Priority: 27.11.2009 FR 0958458
(43) Date of publication of application: 03.10.2012
(73) Proprietor: Illinois Tool Works Inc., Glenview, IL 60025 (US)
(72) Inventor: VITTOZ, Christian, 74300 Cluses (FR)
(74) Representative: Gevers France
(86) International application number: PCT/IB2010/055402
(87) International publication number: WO 2011/064728

(56) References cited:
- EP-A1- 0 564 023
- DE-A1-102006 027 008
- US-A- 4 537 150
- US-A1- 2007 152 824

## Description

The field of the present invention relates to breeding animals for dairy production and, in particular, organizing milking such animals and managing the thus produced milk.

Domestic animals bred for dairy production with either bovine, ovine or caprine type animals, are daily milked and, more frequently, are milked twice a day. Said milking generally occurs in a specific room at the breeder's, the so-called milking parlour, arranged therefor, in which the animals enter one by one and follow an adapted path therein. Such a path leads to one or more milking quays onto which several animals take position one near the other, traditionally at an angle for group milking. After being milked, the animals leave the milking parlour and make room for a new group for them to be milked in turn.

A good management of a breeding farm provides for a regular milking analysis so as to know the quantity of milk produced by each animal and the quality of said milk. A milking parlour, in addition to the equipment necessary for performing milking as such (milking beam, pipe, drawing pumps, storage tank, ...) thus comprises for each animal, means for measuring the produced milk quantity, means for collecting a sample of the milk that will be sent to a laboratory for analysis purposes (such means comprise, for example, a vial, an established term that will be used in the remaining description) and finally, means for storing and processing the obtained information.

While milking is performed by the breeder or his personnel, the managing of the milking information and the follow-up of the animals' performance are generally entrusted to a dairy control external body, in charge of recording the quantities produced by each animal and sending to a laboratory for analysis of the samples taken from the controlled milkings. Such a body generally carries out its control once a month in each of the breeding farms being affiliated to it, on two consecutive milkings in order to average the measurements and thus reduce the consequences of a possible aberrant point in the milk volumes being drawn.

Several devices have been contemplated for performing such tasks, automating them as much as possible with the aim of making easier the task of the dairy control operators but also and above all, with the aim of avoiding handling mistakes. An example of such devices is given in the United States patent US 4,537,150 by Davis Bowers, which describes the process of identification of ane animal and the association of this animal to the quantity being milked from it. This document however doesn't provide any teaching for preventing mistakes when handling the recipient after milking with a view for additional checks.

Conventional means for measuring the quantity of milk produced by an animal include a simple branching in the milk collecting circuit, ending up in a graduated tube for collecting part of the drawn milk. As the branching conditions are fixed, the quantity of milk collected in the collecting tube is a perfectly defined fraction of the quantity of milk produced by the animal. Reading graduations gives, by means of a simple multiplication, the quantity of milk being drawn. Such a system, although relatively basic, nevertheless remains widely used, as it remains much cheaper than other systems based on a permanent installation of volume counters in the facility. Inversely, it has the drawback of not delivering information able to be directly processed by a computer system.

Automating methods for measuring and controlling milkings, besides the cost issue, involve several problems.

First of all, the animals being aligned on the milking quay are positioned higher than the persons in charge of the milking and the dairy control operators. As a consequence, the prescribed devices for identifying animals, generally attached to the animals' ears, are not easily available or readable by the operators, especially as animals are generally positioned at an angle so as to turn their udder to the operators. Systems have been implemented for overcoming such drawbacks; such systems are based on using an animal identifying gate allowing to detect their order of appearance in the milking parlour and thus associate to each animal a position in the room; the system infers that a measurement made in a given position should be attributed to such or such animal. Such a gate is located at the entrance of the milking quay and detects each animal entering by means, for instance, of tags of the RFID type, hanging on the animals (RFID is the acronym of the expression "Radio Frequency IDentification"). Such a system nevertheless does not take into account possible hustles and possible inversions upon positioning the animals after they pass in front of the gate. In such a case, measurements carried out on one of the milking stations are not assigned to the right animal.

A second problem to be taken into consideration is that the tasks performed by the operator of the dairy control body should disrupt the least possible the activity of the milking itself and above all, should not impose waiting periods upon animals getting out, once their milk has been drawn. It is therefore essential that all the milk collecting operations, both in the tube for measuring the quantity being produced or in the analysis vial, be assigned, unambiguously, to one animal and this, as soon as the sample is taken, to the right animal having provided the milk. Under this condition only can the animals be released as soon as milking is completed and not once the set of measurements is carried out and entered into the system.

Finally, there is a third problem in that milking occurs twice a day and that sample taking for analysis should contain samples from both milkings. It is thus required to easily and unambiguously trace the vial that has been used for the first milking for a given animal and to be able to thus complete it with milk from the same animal upon the second milking.

In the current state of the art, organizing milking occurs as follows: animals come on the milking quay and the breeder tells the operator of the control body the order where the animals are positioned as well as their respective identification number. The latter writes down such information on a paper list. When milking is completed, the control operator recovers, animal by animal, the tube giving the produced quantity of milk and replaces it with an empty tube for managing the following milking. He then writes down the measured quantity on the paper list and takes part of the milk for pouring it in an analysis vial. This vial is referenced with an identification number and placed in a rack while waiting for the following milking, during which it will be completed with a second sample; such identification number of the vial is also written down on the paper list opposite the animal's number. For facilitating the handling and the follow-up thereof, such a vial has an identification tag readable by the computer system of the controller and subsequently by the analysis laboratory.

Such a procedure involves taking the tubes in the same entry order as the animals and waiting for the end of the on-going milking of the animal, before taking the following one in the list. The breeder's attention is monopolized at each animal's arrival for recording the identification number.

A solution has been contemplated, comprising replacing the measurement tube positioned in branching on the milking circuit by an electronic volume counter provided at the vicinity of the animal. There is added to this counter a device for identifying the animal and for coupling such an animal to the corresponding counter. Omitting the tubes, assignment mistakes of a tube to the wrong animal is avoided and above all, the animals can be released as soon as milking is completed. Such a device however suffers from the high cost of the electronic volume counters and from the need to modify the milking parlour for installing them. As a result, numerous breeders do not contemplate modifying their facility and rely to the conventional method.

A device according to the preamble of claim 1 is known from US-A-45 37 150.

The aim of the present invention is to overcome drawbacks of the prior art providing a device allowing for reliably recording the produced quantity of milk and for taking a sample for analysis, able to be implemented in a milking parlour provided with a conventional collection system.

To this end, this invention relates to a device for controlling milk produced by an animal to be milked, comprising a first means for identifying the animal and a means for measuring the produced quantity of milk, said measuring means comprising a container supplied with milk via a pipe adapted to supply a determined fraction of the milk produced by the animal, said container comprising a second means for identifying the container and the device comprising a portable apparatus holding means for detecting said first and second identification means and means for associating said first and second identification means for associating the container with the animal, said device being characterized in that said portable apparatus is arranged so as to emit an alarm when the detection means detect a tag of a second identification means which is not associated with the first identification means.

Associating the container giving the drawn milk with a given animal makes it possible to take the tube independently from the order of arrival of the animal as soon as it has been milked, without generating a slack period in the organization of the successive milkings. All the measurements and analyses that will be subsequently performed by an operator of a dairy control body will always be associated with the animal having produced the milk, without the risk of any mistake, due to the implemented alarm.

Detection of the identification means also encompasses reading of such identification means.

Preferably, the device further comprises means for collecting a sample of milk comprising a third identification means able to be detected by said detecting means for being associated with the first identification means, the portable apparatus being also arranged so as to emit an alarm when the detection means detect a tag of a third identification means which is not associated with the first identification means.

In such a way, the milk poured in a collecting means such as an analysis vial can be associated with a given animal, without any operator's interference upon a hand capture, which would introduce mistake risks. Similarly a possible mistake would be avoided due to the implemented alarm.

In an embodiment, the identification means comprise tags physically associated with the animal, the container or the collecting means to be identified.

The portable apparatus is preferably arranged for remotely detecting the identification means, for instance via radio or infrared waves.

According to an embodiment, the identification means comprise radio-identification tags of the RFID type and the detecting means comprise a RFID reader.

In an alternative embodiment, the identification means comprise bar-code tags and the detecting means comprise a bar-code reader.

Preferably, the portable apparatus comprises a memory for storing information relating to the animal to be milked arranged for being associated with the first identification means.

According to an embodiment, the portable apparatus comprises means for the operator, for instance, a display screen, to provide at least one association information part created between the second and/or the third identification means with the first identification means.

In a preferred embodiment, the portable apparatus further comprises a means for capturing the quantity of milk produced by said animal.

In a particular embodiment, the device further comprises a base for the portable apparatus, connected with a system for storing and processing information on quantities of milk produced by said animal.

This invention will be better understood, and other objects, details, features and advantages thereof will become more apparent from the following detailed explanatory description of an embodiment of the invention given as a merely illustrative example and not a limitative one, with reference to the appended schematic drawings, in which:
- Fig. 1 is a general view of a milking quay in a milking parlour of a cattle farm;
- Fig. 2 is a perspective, partially sectional view of the lower part of a tube for measuring the quantity of milk being drawn, according to an embodiment of this invention;
- Fig. 3 is a perspective view of a vial for collecting a sample of milk;
- Fig. 4 is a view of an apparatus for associating a given animal with a tube for measuring the produced quantity of milk, during a dairy control, associated with a schematic view of a coupling step of the tube with the animal;
- Fig. 5 is a perspective view of a dairy control operator's working tray provided with a control device according to an embodiment of this invention;
- Fig. 6 is a schematic view of a step for recognizing a tube and capturing the produced quantity of milk, during a dairy control according to an embodiment of this invention;
- Fig. 7 is a schematic view of a step for recognizing a vial, during a dairy control according to an embodiment of this invention; and
- Fig. 8 is a schematic view of a step for processing the results of a milking during a dairy control according to an embodiment of this invention.

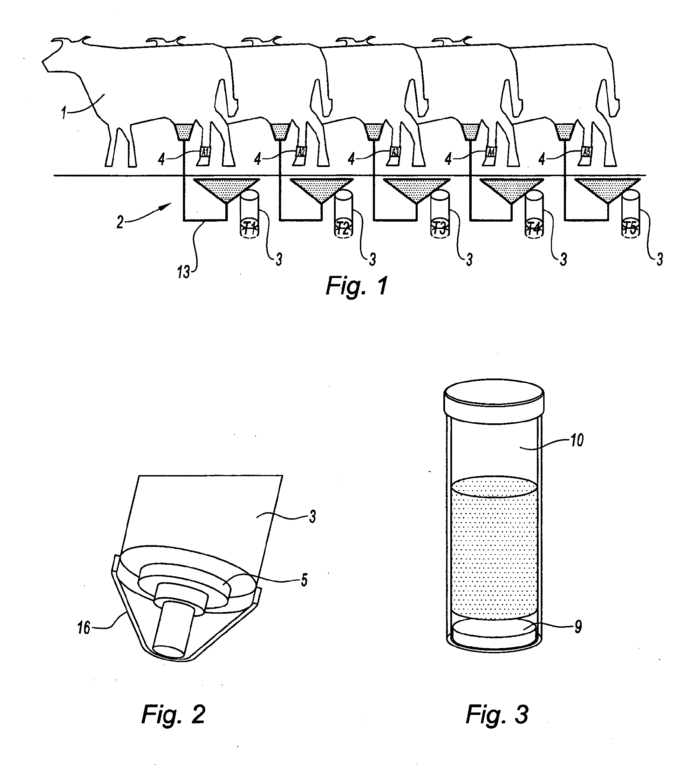

Referring to Fig. 1, there is shown an animal milking operation in a dairy farm. The animals are positioned in a single file and at an angle on the milking quay and receive the milking device 13, conventionally comprising a milking beam and piping connected to a drawing pump. Part of the milk flow being drawn is deviated to a pipe ending up in a graduated tube 3 intended for measuring the drawn quantity of milk.

The tube 3 collects a known fraction of the drawn milk, allowing, knowing the quantity of milk lying in the tube, to find the total quantity of milk being drawn. The tube 3 is graduated on the height thereof so as to be able to read thereupon, either the quantity of milk lying therein when milking is completed, or more directly the total quantity of drawn milk, graduations integrating in such a case the proportionality ratio between the flow rates passing through the pipe for collecting the milk and in that ending in the tube 3.

Fig. 2 shows a tube 3 for measuring the drawn quantity of milk in the lower part thereof. The latter is closed with a cap 16 further maintaining in position on the tube 3 a radio-identification tag 5, in the present case, of the RFID type. It is to be noticed that such tags could be adapted on the caps 16 of existing tubes and do not require any modification of the breeder's milking facility.

Fig. 3 shows a vial 10 for collecting a sample of milk for being sent to a laboratory for analysis purposes. Such a vial also exhibits on the lower part thereof a radio-identification tag 9, in the present case, also of the RFID type.

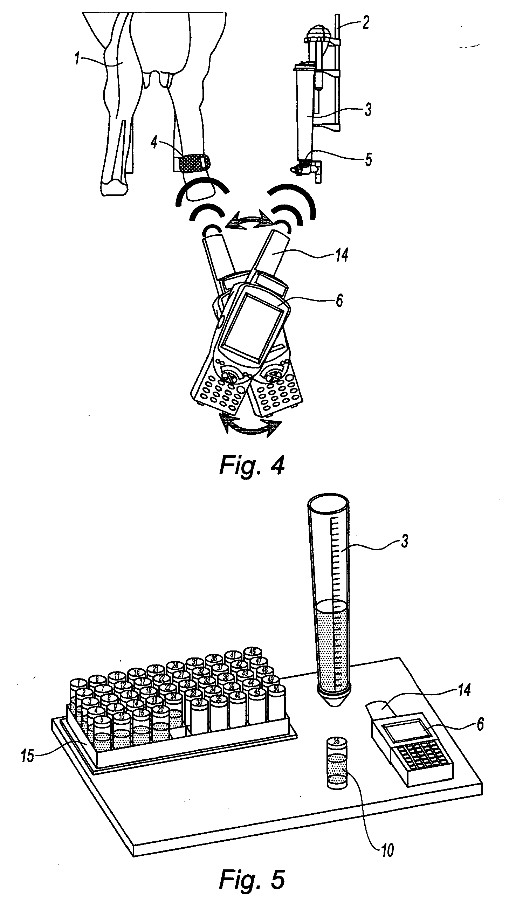

Referring now to Fig. 4, there is shown an animal 1 in position on a milking quay, at a milking station 2 to which there is connected a pipe for feeding milk from the animal, as known. The animal 1 exhibits, on a rear leg, and preferably on the rear leg being located on the milking station 2 side, a bracelet 4 wherein there is integrated a radio-identification tag, in the present case, of the RFID type. A bracelet of such a type is marketed by the Applicant under the commercial designation Patuflex (trademark).

A portable apparatus 6 for detecting tags and capturing information is shown on Fig. 4 in two successive positions, corresponding to a step associating an animal 1 with a tube 3. Such an apparatus 6 carries a RFID reader 14 for reading radio-identification tags. In the present case, the apparatus 6 further comprises therein means for associating the tag 5 of the tube 3 with the tag 4 of the animal 1; such means comprise for instance a microprocessor and/or memory means and/or software means.

Fig. 5 shows a dairy control body operator's working tray onto which there is positioned the apparatus 6 and in front of which there are shown the measurement tube 3 and the collecting vial 10. The tray also carries a rack 15 for storing vials 10 containing milk samples of the various animals being drawn.

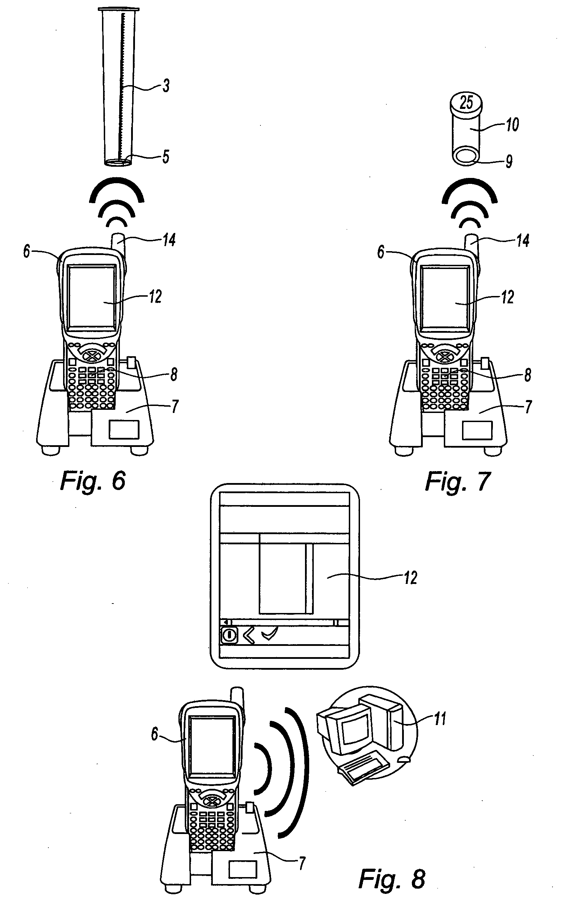

Fig. 6 illustrates the reading phase of the radio-tag 5 of the tube 3 by the capturing apparatus 6 preliminarily to capture in the apparatus 6 by the operator of the volume of milk collected in the tube 3. On this figure, the apparatus 6, comprising a capturing keyboard 8 and a screen 12, is positioned on a base 7. The tube 3, that has been filled during milking and then removed from the milking station 2 onto which it was mounted, is placed nearer to the reader 14 of the capturing apparatus 6 so that the latter can read the radio-tag 5 and is able to associate the quantity of milk - captured by the operator on the capturing keyboard - with the right animal 1.

Fig. 7 similarly shows reading a radio-tag 9 of a vial 10 by the capturing apparatus 6. The vial 10 is provided to receive part of the milk in the tube 3 for sending it to an analysis laboratory. The aim of such a vial 10 is to be partially filled, first during the first milking and then to be completed during the second milking performed by the dairy control operator. Reading the radio-tag 9 of the vial aims at associating the vial 10 with the right animal 1 by association, in the apparatus 6, of their respective tags 9, 4. Furthermore, the vial 10 comprises a visual identification, in the form of, for instance, a number (designated by the order number 25 on Figs. 5 and 7), indicating in which compartment of the rack 15 it should be placed by the control operator, once the first milking is performed; such a visual identification will allow the operator to find the right vial 10 for completing it with the milk from the right animal 1 upon the second milking, such a number having been entered in the apparatus by the operator.

Fig. 8 shows how the information collected upon two consecutive milkings are implemented by an information processing system 11. Once the whole group of animals has been milked, the capturing apparatus 6 being placed on its base, such a base 7 sends the collected information to the processing system 11 which analyzes the latter. The obtained results allow the dairy control body to give the breeder elaborated data on the dairy performance of each animal. First information could be given to the breeder by simply looking up the screen 12 of the capturing apparatus 6, giving, for instance, the total volume produced by a given animal 1 upon the two milkings or still the situation of a particular animal relating to the dairy activity thereof (pregnancy situation, cause of temporary depletion, etc.). More detailed statistic information will be subsequently supplied by the dairy control body to the breeder after the collected information have been studied in detail and the result of the analyses carried out in the laboratory.

The animals 1 milking operation will be now described by means of a device and according to a method adapted to an embodiment of this invention.

The milking operation conventionally starts with the animals 1 entering, under the breeder's instructions, into the milking parlour and with their positioning at an angle on the milking quay. The animals take position each at a milking station 2, their udder being in the vicinity of the milking facility and one of both rear legs near such a facility being provided with a bracelet 4 carrying a radio-identification tag. The breeder positions on the animal 1 the milking equipment 13 and puts the milking machine on. Milk flows, from the animal's teats, through a pipe feeding it to a storing tank, while a part flows through a branching pipe for feeding the tube 3.

While the milking operation occurs, the operator of the dairy control body presents, for each animal, the capturing apparatus 6 first in the vicinity of the bracelet 4 for reading the animal's identification code 1 and subsequently, in the vicinity of the tube 3 wherein a part of the milk from the same animal flows, for reading the identification code of the tube 3. Further to these two operations, the animal 1 and the tube 3 located on the same station 2 are associated or coupled in the memory of the collecting apparatus 6, so that the processing system 11 will subsequently associate the collected information on weight and quality of the milk, with the right animal 1, without possible mistakes.

After such an operation is completed, the animals can be released as soon as they have been milked, allowing all subsequent operations to be carried out in their absence.

The operator then positions the capturing apparatus 6 on his working tray, as shown on Fig. 5, and has from now on his hands free for the remainder of the steps. He then removes, one after the other, the tubes 3 from each of the stations 2 and brings them to the capturing apparatus 6, while replacing them with empty tubes, expecting for the following milking. The first operation comprises getting the tube 3 recognized, and through it the subject animal, by the software of the capturing apparatus 6, reading its radio-identification tag 5 by the RFID reader 14. Upon reception of such information, the capturing apparatus 6 displays on its screen two windows, the first one of which being provided for entering the milking volume value and the second one for indicating an order number.

The operator writes on the first window the value of the volume of milk drawn from the animal 1, from the graduations displayed on the tube 3. Such a value could be the total measurement of the drawn milk if such graduations integrate the proportionality ratio between the flow rates in the milk collecting pipe and that of the tube 3, or even the milk volume in the tube 3, correcting the volume then occurring in the software of the data processing system.

The number displayed in the second window corresponds to a number displayed on each of the vials 10 positioned in the vial rack 15. This number is, for instance, defined by the system with a simple incrementation compared to the vial number given upon the previous capture. Using such a number, the operator will know which vial to pick up in this rack. Using this number, it is possible to associate, unambiguously a vial, and, hence, the contents thereof, with a given animal 1. Thereby, one of the objects of this invention is reached, which is to avoid handling mistakes and erroneously assigning a vial to a wrong animal.

The operator, after having written in the first window the milk volume in the tube 3, takes from the rack 15 the vial 10 carrying the number reported in the second window and validates it having its radio-identification tag 9 read by the collecting apparatus 6. In the case where the presented vial does not correspond to that proposed by the collecting apparatus 6, an alarm message is displayed on the screen and offers the operator either to change the vial 10 for taking the suggested one, or to validate his selection. The operator half fills such a vial 10 with milk taken from the tube 3, then puts it back in the rack 15, in the place corresponding to its number, so as to easily find it again upon the second milking. The excess milk of the tube 3 is poured again in an appropriate temporary storage means, for being subsequently poured again in the overall storing tank.

The second milking occurs similarly, with the same steps associating milking stations 2 and their tubes 3 with the animals 1, capturing the produced quantity of milk through reading of the tube 3 and indicating the vial 10 to be filled, by the capturing apparatus 6. It is to be noticed, first, that the position of the animals on the milking quay is not important, the association of the animal 1 with the measuring tube 3 occurring at the milking station 2. Should some hustle with inversion of the animals occurs on the rail, the association carried out during the first step of the method will take this into account and will correctly assign the analyzed milk to the animal it has been drawn from.

Secondly, the system for recognizing the vial 10 through radio-identification, by means of its alarm system should a wrong vial be selected, can prevent milk from two different animals from being mixed in a single analysis vial 10 during two consecutive milkings.

When milking is completed, the operator starts the emission of the information contained in the capturing apparatus 6, by means of the base 7 thereof, to the processing system 11 centralizing all the information obtained upon different milkings and upon different analyses of the quality of milk.

Other alternatives of this invention are possible, such as, for instance that relating to the method to be used for identifying tags. The above described device relates to radio-identification tags readable by a RFID reader. Said tags could be also made of bar-codes and respectively adhered to the bracelet 4, the tube 3 or the vial 10; the reader integrated into the capturing apparatus 6 is then a bar-code reader that the operator puts near the tags for identifying them.

Although the invention has been described in relation with a particular embodiment, it is obvious that modifications are possible without departing from the teaching of the invention as defined in the claims.

## Claims

1. A device for controlling milk produced by an animal to be milked (1), comprising a first means (4) for identifying the animal (1) and a means (3) for measuring the quantity of produced milk, said measuring means (3) comprising a container (3) supplied with milk via a pipe adapted so as to deliver a determined fraction of the milk produced by the animal (1), said container (3) comprising a second means (5) for identifying the container (3) and the device comprising a portable apparatus (6) holding means (14) for detecting said first and second identification means (4, 5) and means for associating said first and second identification means (4, 5) for associating the container (3) with the animal (1), said device being **characterized in that** said portable apparatus (6) is arranged so as to emit an alarm when the detection means (14) detect a tag of a second identification means (5) which is not associated with the first identification means (4).

2. A device according to claim 1, further comprising a means (10) for collecting a sample of the produced milk comprising a third identification means (9) able to be detected by said association means to be associated with the first identification means (4), the portable apparatus (6) being also arranged so as to emit an alarm when the detection means (14) detect a tag of a third identification means (9) which is not associated with the first identification means (4).

3. A device according to any of claims 1 or 2, wherein the identification means (4, 5, 9) comprise tags physically associated with the animal (1), the container (3) or the collecting means (10) to be identified.

4. A device according to claim 3, wherein the identification means (4, 5, 9) comprise radio-identification tags of the RFID type and wherein the detection means comprise a RFID reader (14).

5. A device according to claim 3, wherein the identification means (4, 5, 9) comprise bar-code tags and wherein the detection means (14) comprise a bar-code reader.

6. A device according to any of claims 1 or 2, wherein the portable apparatus (6) comprises a memory for storing information relating to the animal to be milked (1) arranged to be associated with the first identification means (4).

7. A device according to any of claims 1 or 2, comprising a retrieval means for returning (12) to the operator, for instance a display screen (12), at least an association information part created between the second and/or the third identification means (5, 9) with the first identification means (4).

8. A device according to any of claims 1 or 2, wherein the portable apparatus (6) further comprises a means for capturing (8) the quantity of milk produced by said animal.

9. A device according to any of claims 1 or 2, furthermore comprising a base (7) for the portable apparatus (6), connected to a system for storing and processing (11) information relating to the quantities of milk produced by said animal (1).

## Patentansprüche

1. Vorrichtung zur Kontrolle von Milch, die von einem zu melkenden Tier (1) erzeugt wird, die erste Mittel (4) zur Identifikation des Tiers (1) und Mittel (3) zum Messen der erzeugten Milchmenge umfasst, wobei die Messmittel (3) einen Behälter (3) umfassen, der über eine Leitung mit Milch versorgt wird, die ausgelegt ist, einen bestimmten Anteil der von dem Tier (1) erzeugten Milch zuzuführen, wobei der Behälter (3) zweite Mittel (5) zur Identifikation des Behälters (3) umfasst und wobei die Vorrichtung ein tragbares Gerät (6) umfasst, das Mittel (14) zur Detektion der ersten und zweiten Identifikationsmittel (4, 5) und Mittel zum Zuordnen der ersten und zweiten Identifikationsmittel (4, 5) umfasst, um den Behälter (3) dem Tier (1) zuzuordnen, wobei die Vorrichtung **dadurch gekennzeichnet ist, dass** das tragbare Gerät (6) eingerichtet ist, einen Alarm auszugeben, wenn die Detektionsmittel (14) eine Markierung von zweiten Identifikationsmitteln (5) detektieren, die den ersten Identifikationsmitteln (4) nicht zugeordnet ist.

2. Vorrichtung nach Anspruch 1, die ferner Mittel (10) zum Sammeln einer Probe der erzeugten Milch umfasst, die dritte Identifikationsmittel (9) umfassen, die durch die Zuordnungsmittel detektiert werden können, um den ersten Identifikationsmitteln (4) zugeordnet zu werden, wobei das tragbare Gerät (6) außerdem beschaffen ist, einen Alarm auszugeben, wenn die Detektionsmittel (14) eine Markierung von dritten Identifikationsmitteln (9) detektieren, die den ersten Identifikationsmitteln (4) nicht zugeordnet sind.

3. Vorrichtung nach einem der Ansprüche 1 oder 2, wobei die Identifikationsmittel (4, 5, 9) Markierungen umfassen, die dem zu identifizierenden Tier (1), dem Behälter (3) oder den Sammelmitteln (10) physisch zugeordnet sind.

4. Vorrichtung nach Anspruch 3, wobei die Identifikationsmittel (4, 5, 9) Funkidentifizierungsmarkierungen des RFID-Typs umfassen und wobei die Detektionsmittel eine RFID-Ausleseeinheit (14) umfassen.

5. Vorrichtung nach Anspruch 3, wobei die Identifikationsmittel (4, 5, 9) Strichcode-Markierungen umfassen und wobei die Detektionsmittel (14) eine Strichcode-Ausleseeinheit umfassen.

6. Vorrichtung nach einem der Ansprüche 1 oder 2, wobei das tragbare Gerät (6) einen Speicher zum Speichern von Informationen, die sich auf das zu melkende Tier (1) beziehen, die beschaffen sind, um den ersten Identifikationsimitteln (4) zugeordnet zu werden, umfasst.

7. Vorrichtung nach einem der Ansprüche 1 oder 2, die Wiedergewinnungsmittel (12), beispielsweise eine Bildschirmanzeige (12), umfassen, um an die Bedienungsperson mindestens einen Teil der zugeordneten Informationen, die zwischen den zweiten und/oder den dritten Identifikationsmitteln (5, 9) und den ersten Identifikationsmitteln (4) erzeugt wurden, zurückzuleiten.

8. Vorrichtung nach einem der Ansprüche 1 oder 2, wobei das tragbare Gerät (6) ferner Mittel zum Erfassen (8) der von dem Tier erzeugten Milchmenge umfassen.

9. Vorrichtung nach einem der Ansprüche 1 oder 2, die ferner eine Basis (7) für das tragbare Gerät (6) umfassen, die mit einem System zum Speichern und Verarbeiten (11) von Daten verbunden ist, die sich auf die von dem Tier (1) erzeugten Milchmengen beziehen.

## Revendications

1. Dispositif de contrôle du lait produit par un animal à traire (1), comportant un premier moyen (4) d'identification de l'animal (1) et un moyen (3) de mesure de la quantité de lait produit, ledit moyen de mesure (3) comportant un récipient (3) alimenté en lait par une canalisation conformée pour délivrer une fraction déterminée du lait produit par l'animal (1), ledit récipient (3) comportant un deuxième moyen (5) d'identification du récipient (3) et le dispositif comportant un appareil portable (6) porteur d'un moyen (14) de détection desdits premier et deuxième moyens d'identification (4, 5) et un moyen d'association desdits premier et deuxième moyens d'identification (4, 5) pour associer le récipient (3) à l'animal (1), ledit dispositif étant **caractérisé en ce que** ledit appareil portable (6) est conçu pour émettre une alerte lorsque le moyen de détection (14) détecte une étiquette d'un deuxième moyen d'identification (5) qui n'est pas associée au premier moyen d'identification (4).

2. Dispositif selon la revendication 1, comportant en outre un moyen (10) de recueil d'un échantillon du lait produit comportant un troisième moyen d'identification (9) apte à être détecté par ledit moyen d'association pour être associé au premier moyen d'identification (4), l'appareil portable (6) étant également conçu pour émettre une alerte lorsque le moyen de détection (14) détecte une étiquette d'un troisième moyen d'identification (9) qui n'est pas associée au premier moyen d'identification (4).

3. Dispositif selon l'une quelconque des revendications 1 ou 2 dans lequel les moyens d'identification (4, 5, 9) comportent des étiquettes associées physiquement à l'animal (1), au récipient (3) ou au moyen de recueil (10) à identifier.

4. Dispositif selon la revendication 3, dans lequel les moyens d'identification (4, 5, 9) comportent des étiquettes de radio-identification du type RFID et dans lequel le moyen de détection comporte un lecteur RFID (14).

5. Dispositif selon la revendication 3, dans lequel les moyens d'identification (4, 5, 9) comportent des étiquettes à codes-barres et dans lequel le moyen de détection (14) comporte un lecteur de codes-barres.

6. Dispositif selon l'une quelconque des revendications 1 ou 2, dans lequel l'appareil portable (6) comporte une mémoire de stockage d'informations concernant l'animal à traire (1) conçues pour être associées au premier moyen d'identification (4).

7. Dispositif selon l'une quelconque des revendications 1 ou 2, comportant un moyen extracteur de restitution (12) à l'opérateur, par exemple un écran d'affichage (12), d'au moins une partie des informations d'association créée entre le deuxième et/ou le troisième moyen d'identification (5, 9) avec le premier moyen d'identification (4).

8. Dispositif selon l'une quelconque des revendications 1 ou 2, dans lequel l'appareil portable (6) comporte en outre un moyen de saisie (8) de la quantité de lait produite par ledit animal.

9. Dispositif selon l'une quelconque des revendications 1 ou 2, comportant en outre un socle (7) pour l'appareil portable (6), relié à un système de stockage et de traitement (11) d'informations sur les quantités de lait produites par ledit animal (1).
